(19) Europäisches Patentamt
European Patent Office
Office européen des brevets

(11) Veröffentlichungsnummer: **0 047 427**
**B1**

# (12) EUROPÄISCHE PATENTSCHRIFT

(45) Veröffentlichungstag der Patentschrift: **18.05.83**

(51) Int. Cl.³: **C 09 B 55/00** // D06P3/04

(21) Anmeldenummer: **81106609.1**

(22) Anmeldetag: **26.08.81**

## (54) Sulfonsäuregruppenhaltige 1:2-Chromkomplexfarbstoffe.

(30) Priorität: **10.09.80 DE 3034002**

(43) Veröffentlichungstag der Anmeldung: **17.03.82 Patentblatt 82/11**

(45) Bekanntmachung des Hinweises auf die Patenterteilung: **18.05.83 Patentblatt 83/20**

(84) Benannte Vertragsstaaten: **CH DE FR GB IT LI**

(56) Entgegenhaltungen:
**DE-A-2 123 453**
**DE-A-2 501 469**

(73) Patentinhaber: **BASF Aktiengesellschaft, Carl-Bosch-Strasse 38, D-6700 Ludwigshafen (DE)**

(72) Erfinder: **Baumann, Hans, Dr., Roemerweg 31, D-6706 Wachenheim (DE)**
Erfinder: **Grychtol, Klaus, Dr., Seebacher Strasse 96A, D-6702 Bad Duerkheim (DE)**

**EP 0 047 427 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Sulfonsäuregruppenhaltige 1:2-Chromkomplexfarbstoffe

Die Erfindung betrifft 1:2-Chromkomplexverbindungen von Arylazo-azamethinen der allgemeinen Formel

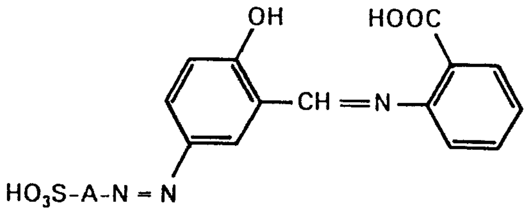

,

in der A ein Naphthalin- oder Benzolrest ist, der durch Alkyl, Alkoxyl oder Halogen ein- oder mehrfach substituiert sein kann.

Beispiele für $HO_3S$-A-$NH_2$ sind: 1-Aminonaphthalin-4-, -5-, -6- oder -7-sulfonsäure, 2-Aminonaphthalin-5-, -7- oder -8-sulfonsäure, 1-Aminobenzol-3- oder -4-sulfonsäure, 1-Methyl-2-aminobenzol-4- oder -5-sulfonsäure, 1-Methyl-4-aminobenzol-2- oder -3-sulfonsäure, 1,4-Dimethyl-2-aminobenzol-5-sulfonsäure, 1-Chlor-2-aminobenzol-4- oder -5-sulfonsäure, 1-Chlor-2-methyl-5-aminobenzol-4-sulfonsäure, 1-Chlor-4-aminobenzol-2-sulfonsäure, 1,4-Dichlor-2-aminobenzol-5-sulfonsäure, 1-Methoxy-2-aminobenzol-4-sulfonsäure, 1-Äthoxy-4-aminobenzol-2-sulfonsäure, 1,4-Dimethoxy-2-aminobenzol-5-sulfonsäure, 1-Chlor-4-methoxy-5-aminobenzol-2-sulfonsäure.

Als Kupplungskomponente wird Salicylaldehyd, als Azamethinkomponente Anthranilsäure verwendet.

Die Herstellung der Chromkomplexe erfolgt nach bekannten Verfahren in wässriger Lösung bei erhöhter Temperatur, vorzugsweise bei Siedetemperatur. Als chromabgebende Mittel verwendet man Salze des dreiwertigen Chroms, z.B. als Chlorid, Sulfat, Formiat, Acetat, Tartrat oder Chromate in Gegenwart von Reduktionsmitteln.

Die bei der Komplexbildung frei werdende Säure wird durch Basen wie Alkalihydroxyde oder -carbonate, aliphatische Amine, Aminoalkanole oder durch Alkalisalze von Carbonsäuren, wie die der Ameisensäure, Essigsäure, Iminotriessigsäure, Weinsäure oder Adipinsäure, neutralisiert bzw. abgepuffert.

Anstelle der Arylazo-azamethine setzt man vorteilhaft die Einzelkomponenten, d.h. Arylazosalicylaldehyde und Anthranilsäure, ein.

Die entstehenden 1:2-Chromkomplexverbindungen werden, je nach Löslichkeit, direkt oder nach Aussalzen bzw. Ansäuern durch Filtration isoliert. Durch Verwendung geeigneter N-Basen, wie längerkettiger Alkyl- oder Alkoxyalkylamine, Diarylguanidine oder Arylbiguanidine, werden die Komplexe als wasserunlösliche, organophile Ammoniumsalze der Farbstoffkomplexsäuren ausgefällt und lassen sich auf diese Weise frei von Mineralsalzen isolieren. Die Komplexverbindungen können ferner durch Eindampfen oder Versprühen der Reaktionslösungen als wasserlösliche Pulver erhalten werden.

Man kann die Komplexfarbstoffe auch als von Mineralsalzen freie, lagerstabile Lösungen erhalten, wenn die Komplexbildung, gegebenenfalls in Gegenwart von organischen Lösungsmitteln, wie Alkoxyalkanolen oder Säureamiden, mit Alkanolaminen als Neutralisationsmitteln durchgeführt wird.

Die Farbstoffe eignen sich zum Färben und Bedrucken natürlicher oder synthetischer stickstoffhaltiger Materialien, wie Wolle, Leder, Polyamiden oder Polyurethanen. Mineralsalzfreie Farbstoffe können auch zum Einfärben organischer Flüssigkeiten oder Massen, wie Lacken, Tinten, Holzbeizen oder zur Spinnfärbung für Synthesefasern eingesetzt werden.

Man erhält intensive Gelb- bis Gelborangefärbungen mit guten Echtheitseigenschaften, insbesondere guter Lichtechtheit.

Dem aus der DE-A-21 23 453 bekannten Komplexfarbstoff, der im Arylazorest eine Nitrogruppe und als Azamethinkomponente eine Hydroxysulfonylanthranilsäure enthält, sind die neuen Verbindungen überraschenderweise in der Lichtechtheit überlegen. Gegenüber aus der DE-C-25 01 469 bekannten unsymmetrischen Chromkomplexen, die aus je einem Arylazo-azamethin und einem Azamethin erhalten werden, zeichnen sich die neuen Verbindungen durch höhere Farbstärke und einfachere Herstellungsverfahren sowie vielfach durch verbesserte Nassechtheitseigenschaften ihrer Wollfärbungen aus.

Beispiel 1

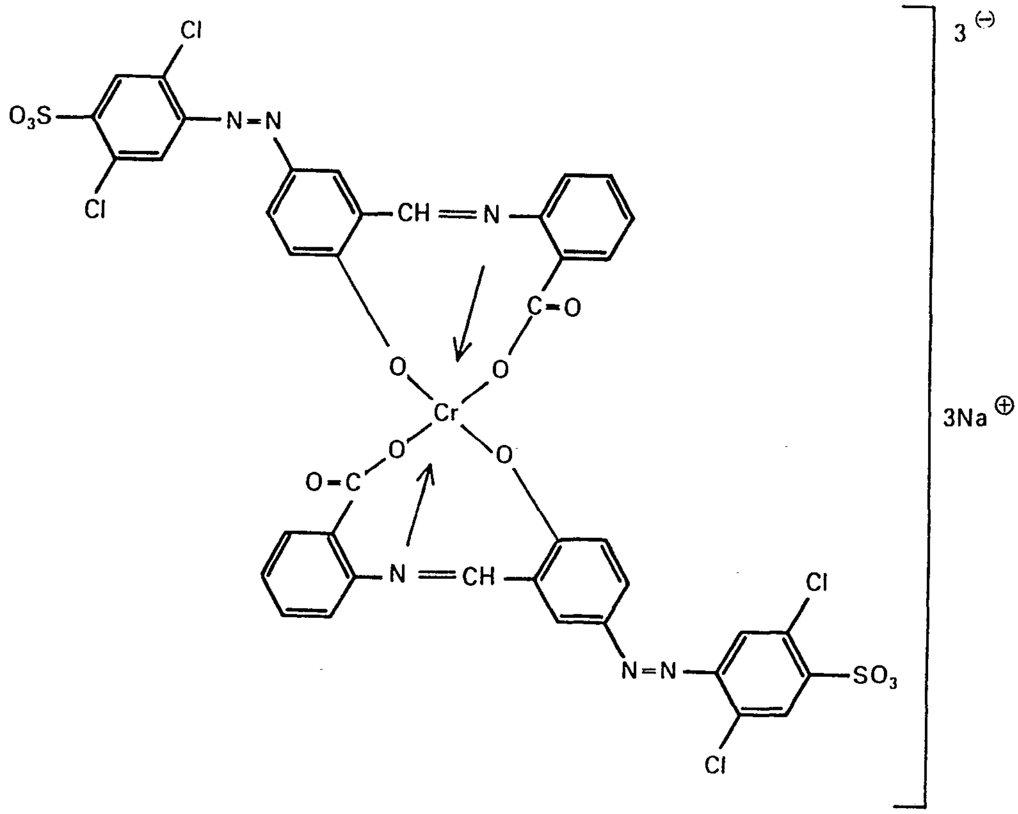

112,5 Teile der Azoverbindung aus diazotierter 1,4-Dichlor-2-aminobenzol-5-sulfonsäure und Salicylaldehyd werden mit 42 Teilen Anthranilsäure in 1200 Teilen Wasser angerührt und mit 12 Teilen Natriumhydroxyd sowie 50 Teilen Natriumacetat eine Stunde auf 50°C erhitzt. Nach Zugabe einer Chrom-III-formiatlösung aus Chrom-III-oxyd-Hydrat (entspr. 12 Teilen $Cr_2O_3$), 14 Teilen Ameisensäure und 250 Teilen Wasser erhitzt man auf Rückflusstemperatur, bis im Dünnschichtchromatogramm die vollständige Umsetzung zur 1:2-Chromkomplexverbindung ersichtlich ist. Man stellt mit Sodalösung auf pH 7,8, filtriert und isoliert den Komplexfarbstoff durch Eindampfen oder Sprühtrocknung. Das in einer Menge von 246 Teilen erhaltene braune Farbstoffpulver mit einem Gehalt von 33% an Natriumsalzen der Essigsäure und Ameisensäure ergibt auf Wolle und synthetischen Polyamidfasern rotstichige Gelbfärbungen, die sich durch hohe Licht- und Nassechtheiten auszeichnen. Auf chromgegerbtem Leder erhält man eine farbstarke Gelborangefärbung.

Beispiel 2

33 Teile des Natriumsalzes der Azoverbindung Anilin-4-sulfonsäure → Salicylaldehyd werden in 400 Teilen Wasser bei 70°C gelöst und mit 14 Teilen Anthranilsäure und 27 Teilen Natriumformiat versetzt. Man gibt eine Lösung von 14 Teilen Chrom-III-chlorid ($CrCl_3 \cdot 6H_2O$) in 50 Teilen Wasser hinzu und erhitzt zum Sieden. Durch allmähliche Zugabe verdünnter Natriumhydroxydlösung erhält man einen pH-Wert von 6,5 aufrecht. Nach beendeter Komplexierung wird filtriert und mit 120 Teilen Natriumchlorid ausgesalzen. Man saugt nach Erkalten ab und trocknet; es werden 63 Teile eines natriumchloridhaltigen Farbstoffpulvers erhalten, das Wolle in neutralen Gelbtönen mit hoher Lichtechtheit anfärbt.

In der folgenden Tabelle sind die Diazokomponenten weiterer Arylazo-azamethin-Komplexe der allgemeinen Formel mit den Farbtönen ihrer Woll- bzw. Polyamidfärbungen angegeben:

| Bsp. | $HO_3S$-A-$NH_2$ | Farbton |
|---|---|---|
| 3 | 2-Aminonaphthalin-5-sulfonsäure | gelborange |
| 4 | 1-Aminobenzol-3-sulfonsäure | gelb |
| 5 | 1-Chlor-2-aminobenzol-4-sulfonsäure | grünstichig gelb |
| 6 | 1-Methyl-2-aminobenzol-5-sulfonsäure | rotstichig gelb |
| 7 | 1-Methoxy-2-aminobenzol-5-sulfonsäure | gelborange |
| 8 | 1-Äthoxy-4-aminobenzol-3-sulfonsäure | gelborange |
| 9 | 1,4-Dimethoxy-2-amino-benzol-5-sulfonsäure | orange |
| 10 | 1-Chlor-4-methoxy-5-amino-benzol-2-sulfonsäure | gelborange |
| 11 | 4-Chlor-1-aminobenzol-3-sulfonsäure | gelb |

Beispiel 12

Eine Suspension von 31 Teilen der Azoverbindung Anilin-4-sulfonsäure → Salicylaldehyd und 14 Teilen Anthranilsäure in 150 Teilen Dipropylenglykol wird mit einer wie in Beispiel 1 hergestellten wässrigen Chrom-III-formiatlösung (entspr. 3,8 Teilen $Cr_2O_3$) versetzt und auf 90°C erhitzt. Durch allmähliche Zugabe von insgesamt 21 Teilen Diäthanolamin erhält man einen neutralen pH-Wert aufrecht. Nach beendeter Umsetzung verdünnt man mit 110 Teilen Wasser, stellt mit ca. 6 Teilen Diäthanolamin auf pH 8,0 und filtriert bei 60°C. Durch Verdünnen mit Dipropylenglykol auf 360 Teile erhält man eine lagerstabile Farbstofflösung, die ca. 60 Teile des Diäthanolaminsalzes der Komplexverbindung von Beispiel 2 enthält.

Sie verhält sich färberisch und echtheitsmässig wie der Farbstoff des Beispiels 2; als Flüssigeinstellung ist sie anwendungstechnisch besonders für kontinuierliche Färbe- und Druckverfahren auf textilen Bodenbelägen aus synthetischen Polyamiden bzw. Wolle geeignet.

**Patentansprüche**

1. Sulfonsäuregruppenhaltige 1:2-Chromkomplexfarbstoffe von Arylazo-azamethinen der allgemeinen Formel

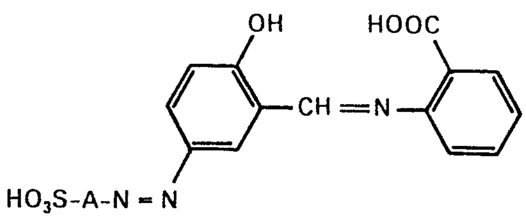 ,

in der A ein Naphthalin- oder Benzolrest ist, der durch Alkyl, Alkoxyl oder Halogen ein- oder mehrfach substituiert sein kann.

2. Verwendung der Farbstoffe gemäss Anspruch 1 zum Färben stickstoffhaltiger Fasern oder als Farbstoffe für Lacke und organische Flüssigkeiten.

**Claims**

1. A 1:2 chromium complex dye of an arylazoazomethine of the general formula

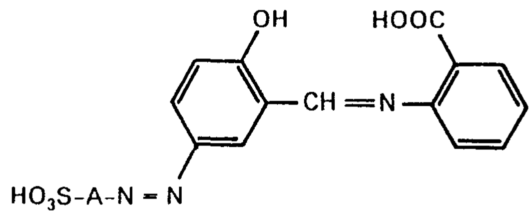 ,

where A is a naphthalene or benzene radical which may be monosubstituted or polysubstituted by alkyl, alkoxy or halogen.

2. The use of a dye as claimed in claim 1 for dyeing nitrogen-containing fibers or as dyes for surface coatings and organic liquids.

**Revendications**

1. Colorants complexes au chrome 1:2, contenant des groupes acide sulfonique, d'arylazoazaméthines de formule générale

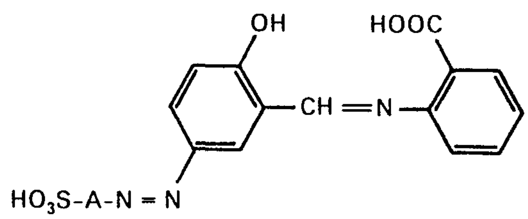 ,

dans laquelle A est un radical naphtalène ou benzène qui peut être substitué une fois ou plusieurs fois par un alcoyle, un alcoxy ou un halogène.

2. Utilisation des colorants selon la revendication 1 pour la teinture de fibres azotées ou comme matière colorante pour des vernis et des liquides organiques.